# FASCICULE DE BREVET EUROPEEN

(11) **EP 0 578 517 B1**
(45) Date de publication et mention de la délivrance du brevet: **11.11.1998**
(21) Numéro de dépôt: 93401373.1
(22) Date de dépôt: 28.05.1993
(51) Int. Cl.: B22D 1/00, B22C 9/08, C21C 1/10, B01D 29/03

(54) **Procédé pour traiter du métal en fusion dans une opération de coulée avec interposition d'un filtre, et filtre pour la mise en oeuvre de ce procédé**
Verfahren zum Behandeln von schmelzflüsssigem Metall während eines Giessvorganges unter Verwendung eines Filters sowie dazu verwendete Filter
Process for treating a molten metal during a casting operation using a filter and filter used therefor

(30) Priorité: 29.05.1992 LU 88124; 30.10.1992 FR 9213039; 06.01.1993 FR 9300062
(43) Date de publication de la demande: 12.01.1994
(73) Titulaire: DAUSSAN ET COMPAGNIE, F-57140 Woippy (FR)
(72) Inventeur: Daussan, Jean-Charles, F-57000 Metz (FR); Daussan, Gérard, F-57050 Longeville-les-Metz (FR); Daussan, André, F-57050 Longeville-les-Metz (FR)
(74) Mandataire: Keib, Gérard

(56) Documents cités:
- EP-A- 0 195 211
- EP-A- 0 234 825
- EP-A- 0 234 979
- EP-A- 0 249 897
- DE-A- 2 608 282
- US-A- 3 658 115
- PATENT ABSTRACTS OF JAPAN vol. 12, no. 37 (C-473)4 Février 1988 & JP-A-62 185 859 (KUBOTA LTD) 14 Aoüt 1987

## Description

La présente invention concerne un dispositif pour filtrer et traiter du métal en fusion suivant le préambule de la revendication 1.

L'invention concerne également une utilisation d'un tel dispositif dans un procédé de coulée en moule de métal en fusion connue énoncé dans la revendication 15.

D'habitude, les agents de traitement sont tout simplement disposés dans les canaux pour le passage du métal en fusion, ce qui est fastidieux.

On sait de façon classique interposer un filtre dans un canal de passage du métal en fusion afin de filtrer ce métal avant son arrivée dans un moule.

Il est aussi connu de prévoir la distribution des produits destinés au traitement du métal en interposant les produits de traitement dans des sachets destructibles que l'on place dans un recoin ou un cul-de-sac des canaux de passage du métal se trouvant avant le filtre ; ce procédé présente l'inconvénient de ne pas garantir que tout le métal entre en contact avec les agents de traitement.

Il arrive en effet que du fait des turbulences liées à la coulée du métal dans les canaux de coulée, les sachets destructibles soient chassés de l'endroit où ils ont été déposés et soient refoulés en amont dans l'entonnoir dans lequel on verse le métal en fusion. Il y a alors perte de matériau de traitement inutilisé et rebut des pièces coulées dans le métal est insuffisamment traité.

Par ailleurs, le métal en fusion n'entre pas totalement en contact avec le matériau de traitement, et le métal coulé dans le moule risque d'être hétérogène.

Il est également connu de traiter le métal liquide en plaçant en amont du filtre des pastilles des produits de traitement agglomérés à l'aide d'un liant ou par pression et/ou frittage et/ou moulage : là encore, on n'a pas la garantie que tout le métal a été traité. De plus, cela représente une manipulation supplémentaire.

On connaît, d'après le EP-A-0 249 897, un procédé et un appareil pour effectuer un traitement de dégazage, d'affinage ou de filtration sur des métaux ou alliages en fusion, au moyen d'un agent de traitement à l'état solide. L'agent de traitement, sous forme de granules solides, est introduit dans une enceinte fermée présentant des parois situées en face l'une de l'autre et ménagées sous forme de diaphragmes perforés munis de trous ayant des dimensions adaptées à retenir les granules. L'enceinte est placée à la base du canal de coulée, et le métal en fusion traverse cette enceinte en traversant les diaphragmes pour venir en contact avec l'agent de traitement à l'intérieur de l'enceinte.

Cet appareil de traitement de métal liquide n'a sensiblement pas d'action en matière de filtration dudit métal liquide.

En effet, les diaphragmes, comportant des trous de diamètre respectif 8 mm et 3,5 mm, ne présentent aucune fonction de filtration. En outre, les grains diminuent de diamètre dès que le matériau de traitement commence à être absorbé par le métal liquide, et il arrive rapidement un moment où ces grains ont un diamètre inférieur au diamètre des trous du diaphragme situé en aval et passent très rapidement à travers ces trous, les dernières quantités de métal coulées n'étant pas traitées.

En outre, les grains sont entraînés de manière aléatoire à l'intérieur du dispositif du fait des turbulences créées par le passage du métal liquide, de sorte que l'on a un risque de répartition inégale du matériau de traitement sur la surface du diaphragme inférieur.

Le but de la présente invention est de remédier aux inconvénients des dispositifs connus, et de proposer un dispositif pour filtrer et traiter efficacement du métal en fusion, ce dispositif permettant de faire en sorte que tout le métal en fusion coulé soit traité de façon aussi régulière et homogène que possible, et que le matériau de traitement soit entièrement utilisé pour traiter ledit métal.

Le but de la présente invention est également de proposer une utilisation d'un tel dispositif dans un procédé de coulée en moule de métal en fusion.

Le dispositif visé par la présente invention est un dispositif pour filtrer et traiter du métal en fusion, comprenant une série d'au moins deux plaques en matière minérale réfractaire définissant entre elles une ou plusieurs cavités, ces plaques comportant chacune une série de trous permettant le passage du métal en fusion, l'une au moins des cavités contenant un matériau pour le traitement dudit métal.

Suivant la présente invention, ce dispositif est caractérisé en ce que les plaques sont des plaques filtrantes comportant chacune une série de trous de filtration permettant le passage et la filtration du métal en fusion, en ce que deux plaques filtrantes adjacentes sont assemblées en contact l'une avec l'autre le long de leur périphérie, en ce que la matériau de traitement se trouve sou forme de plaque (ou de barres) et en ce que la plaque a (les barres ont) une forme telle que, vu dans le sens du passage du métal liquide, elle(s) laisse(nt) sur les plaques filtrantes au moins une région non recouverte comportant des trous de filtration pour permettre au métal liquide ayant pénétré dans la cavité de venir en contact avec le matériau de traitement de la plaque (des barres) et de s'écouler autour de ladite plaque (desdites barres) puis par les trous de filtration de la seconde plaque filtrante.

On est ainsi certain que le matériau de traitement, retenu entre deux plaques, ne pourra pas être chassé de la cavité par les turbulences liées à l'écoulement du métal en fusion, et sera entièrement utilisé pour le traitement du métal. On supprime ainsi tout risque de rebut de pièces coulées pour défaut de traitement du métal.

En outre, tout le métal en fusion traversant le filtre est mis en contact avec le matériau de traitement. Ce contact s'effectue de plus dans la cavité du filtre dans laquelle le métal circule à une vitesse plus faible que celle qu'il a dans les canaux.

La demanderesse a constaté que le métal coulé avec le dispositif de l'invention présente une répartition du produit de traitement et une homogénéité de traitement supérieures à celles obtenues avec les procédés connus.

Sans prétendre que ce soit la seule explication possible de ce résultat inattendu et surprenant, la demanderesse suppose que ceci est dû à la vitesse de passage très ralentie du métal dans la cavité du filtre par rapport aux vitesses nettement plus élevées de passage dans les trous des plaques. Il en résulte un brassage énergique et très régulier entre le métal non traité arrivant à grande vitesse à l'intérieur de la cavité et le métal déjà traité qui séjourne dans cette cavité avant d'être évacué par les trous de la seconde plaque, ce brassage se prolongeant pendant toute la durée de la coulée.

Ce brassage, combiné au fait que le produit de traitement est piégé à l'intérieur de la cavité et ne peut en aucun cas en être chassé, explique probablement la répartition très régulière du produit de traitement dans le métal de la pièce coulée et l'excellente homogénéité du résultat du traitement dudit métal à l'intérieur de ladite pièce, du début jusqu'à la fin de la coulée.

Les filtres sont utilisés pour éliminer du métal liquide toute inclusion solide par exemple d'oxyde métallique susceptible d'affecter la qualité du métal qui est coulé dans un récipient tel qu'une lingotière ou un moule.

L'efficacité d'un tel filtre dépend essentiellement du diamètre des trous et du nombre des plaques filtrantes qui le composent. Ainsi, plus le diamètre des trous est faible, plus le filtre est capable de retenir des inclusions fines, et meilleure sera la filtration.

Lorsque les trous ont un diamètre inférieur à 1 mm, la filtration devient très longue (le métal liquide passe difficilement à travers de tels trous) et ces trous se colmatent rapidement.

Lorsqu'on augmente le nombre de plaques filtrantes à trous, le filtre devient plus onéreux.

Le matériau de traitement sous forme de plaque ou de barres présent dans la cavité du filtre améliore les caractéristiques du métal coulé.

Ce matériau de traitement permet ainsi d'augmenter d'une manière très significative l'efficacité du filtre par effet de barrage. Par ailleurs, les cavités ménagées entre les plaques filtrantes du filtre forment des réceptacles particulièrement bien adaptés à recevoir le matériau de traitement.

Lors du passage du métal liquide dans le filtre, ce métal lèche la surface de la plaque ou des barres du matériau de traitement, lequel traite le métal dans le but de le bonifier.

En effet, le matériau de traitement se présente sous forme de plaques ou de barres présentant une surface de contact avec le métal liquide qui varie très peu au cours de la coulée du métal liquide.

De plus, ces plaques ou ces barres ont une liberté de déplacement limitée dans la cavité du dispositif, de sorte que les conditions de contact entre le matériau de traitement et le métal liquide évoluent très peu au cours de la coulée.

Enfin, du fait de la présence d'au moins une région des plaques filtrantes non recouverte par la plaque ou les barres et comportant des trous de filtration permettant le libre passage du métal liquide, et de la surface de contact importante entre le matériau de traitement et le métal liquide, le métal traverse le filtre à un débit sensiblement constant depuis le début jusqu'à la fin de la coulée, tout en venant au contact du matériau de traitement qui, du fait de sa surface de contact sensiblement constante, passe dans le métal à un débit également sensiblement constant produisant une concentration sensiblement constante du matériau de traitement dans le métal liquide ainsi traité et filtre.

Suivant un autre aspect de l'invention, celle-ci concerne également l'utilisation d'un dispositif selon le premier aspect de l'invention dans un procédé de coulée en moule de métal en fusion comportant les étapes d'interposition d'un filtre et de traitement du métal au cours de ladite coulée.

Suivant une version préférée de l'invention, le matériau de traitement est un matériau inoculant qui est de préférence choisi parmi les composés suivants: alliages de fer, magnésium et composés du magnésium, calcium et ses composés, composés de lithium, composés de strontium et composés de baryum, silicium, zirconium, aluminium, terres rares, graphite et carbone.

D'autres particularités et avantages de l'invention apparaîtront encore dans la description ci-après.

Aux dessins annexés donnés à titre d'exemples non limitatifs:
- la figure 1 est une vue en coupe suivant I-I à la figure 2 d'un filtre à deux étages conforme à un premier mode de réalisation de la présente invention;
- la figure 2 est une vue en plan du filtre de la figure 1;
- la figure 3 est une vue semblable à la figure 1 d'un filtre ne comportant qu'une seule cavité;
- la figure 4 est une vue agrandie en coupe d'un filtre conforme à un deuxième mode de réalisation de la présente invention;
- la figure 5 est une vue semblable à la figure 4 représentant en deux demi-vues accolées deux variantes du filtre représenté à ladite figure;
- la figure 6 est une vue en coupe suivant VI-VI à la figure 7;
- la figure 7 est une vue de dessus, en deux demi-vues, la plaque supérieure ayant été enlevée, de deux variantes d'un troisième mode de réalisation de la présente invention
- la figure 8 est une vue en coupe d'un quatrième mode de réalisation d'un filtre conforme à l'invention;
- la figure 9 est une vue de dessus avec arrachements du filtre selon la figure 8;
- la figure 10 est une vue en coupe d'un cinquième mode de réalisation d'un filtre;
- la figure 11 est une vue de dessus du filtre selon la figure 10;
- la figure 12 est une vue partielle et en coupe d'un sixième mode de réalisation;
- la figure 13 est une vue en coupe d'un septième mode de réalisation.

Comme représenté aux figures, le procédé visé par l'invention pour traiter du métal en fusion pendant une opération de coulée en moule avec interposition d'un filtre 1, 1a, 1b, 1c, 1d, 1e, comporte l'étape qui consiste à placer avant la coulée du métal en fusion un matériau 12, 22, 23, 24 de traitement dudit métal en un point du canal adapté à guider ledit métal jusqu'audit filtre.

Suivant l'invention, ce procédé est caractérisé en ce qu'on utilise un filtre 1, 1a, 1b, 1c, 1d, 1e, pour métal liquide comprenant une série d'au moins deux plaques 2, 2a, 2b, en matière minérale réfractaire en contact les unes avec les autres par leur périphérie et définissant entre elles une ou plusieurs cavités 4, 5, 6, ces plaques 2, 2a, 2b, comportant chacune une série de trous 3, 3a, 3b, permettant le passage et la filtration du métal liquide, et en ce qu'on introduit le matériau 12, 22, 23, 24 de traitement dans l'une au moins des cavités 4, 5, 6, avant de mettre en place le filtre 1, 1a, 1b, 1c, 1d, 1e, dans un moule (non représenté), tel qu'un manchon cylindrique.

On choisit le matériau 12, 22, 23, 24 de traitement parmi les produits désulfurants, thermogènes, inoculants, sphéroïdisants, recarburants, affinants, modificateurs, et les alliages d'addition.

Le poids du matériau 12, 22, 23, 24 de traitement peut varier entre 0,001% et 1% environ du poids du métal liquide, suivant la nature du traitement que l'on veut appliquer.

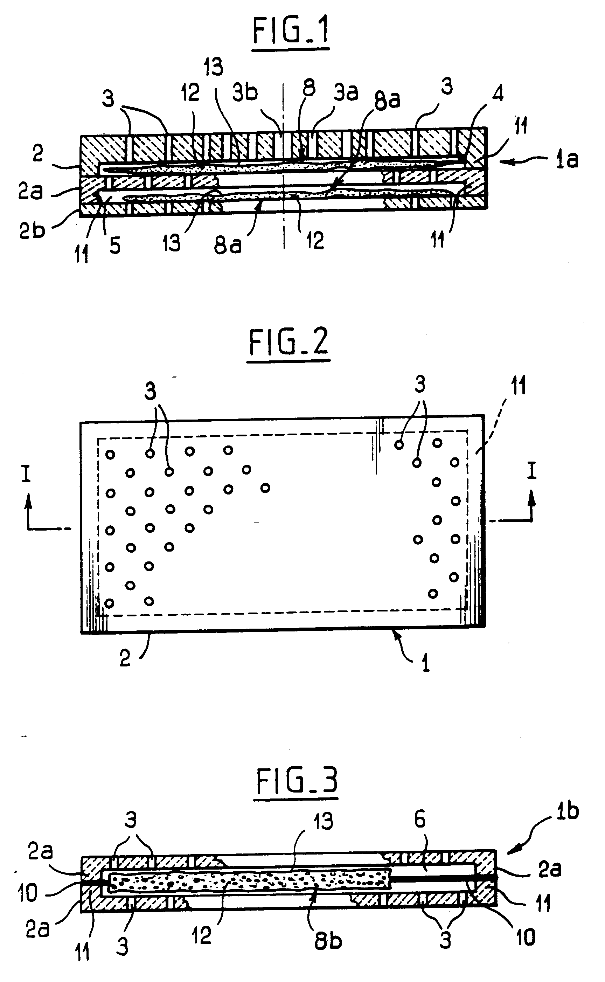

Le filtre 1a représenté à la figure 1 comporte trois plaques 2, 2a, 2b. Les plaques 2 et 2a comportent chacune un rebord périphérique 11 en saillie adapté à venir en contact avec la plaque adjacente, 2a, 2b, correspondante qui est ainsi maintenue à distance pour ménager une cavité, respectivement 4, 5. La plaque 2b ne comporte pas de tel rebord, qui augmenterait inutilement la hauteur du filtre 1.

La plaque supérieure, qui est normalement placée côté amont, est percée de trous 3, 3a, 3b, de diamètres différents croissant dans cet ordre. Les plaques 2a, 2b ont également des trous de diamètres égaux ou différents. Les trous de la plaque 2a intermédiaire sont disposés en quinconce par rapport aux trous des plaques extrêmes 2 et 2b. Les trous 3, 3a, 3b peuvent avoir des sections autres que circulaires.

Les plaques 2, 2a, 2b sont de manière connue réalisées en une matière minérale réfractaire céramique, par exemple en silice, et sont capables de supporter sans déformation la température du métal coulé.

Le filtre 1 représenté à la figure 2 comporte une plaque 2 présentant des trous 3 sensiblement de même diamètre.

Le filtre 1b représenté à la figure 3 est constitué de deux plaques 2a dont les bords périphériques 11 sont adjacents et réunis l'un avec l'autre par un collage 10. Les hauteurs des rebords 11 sont représentées identiques mais pourraient être différentes. Les deux plaques délimitent une cavité 6.

Les figure s4 et 5 d'une part, 6 et 7 d'autre part, représentent respectivement un filtre 1c, 1d, constitué de deux plaques 2a en contact par leur bord périphérique 11 pour délimiter une cavité 6.

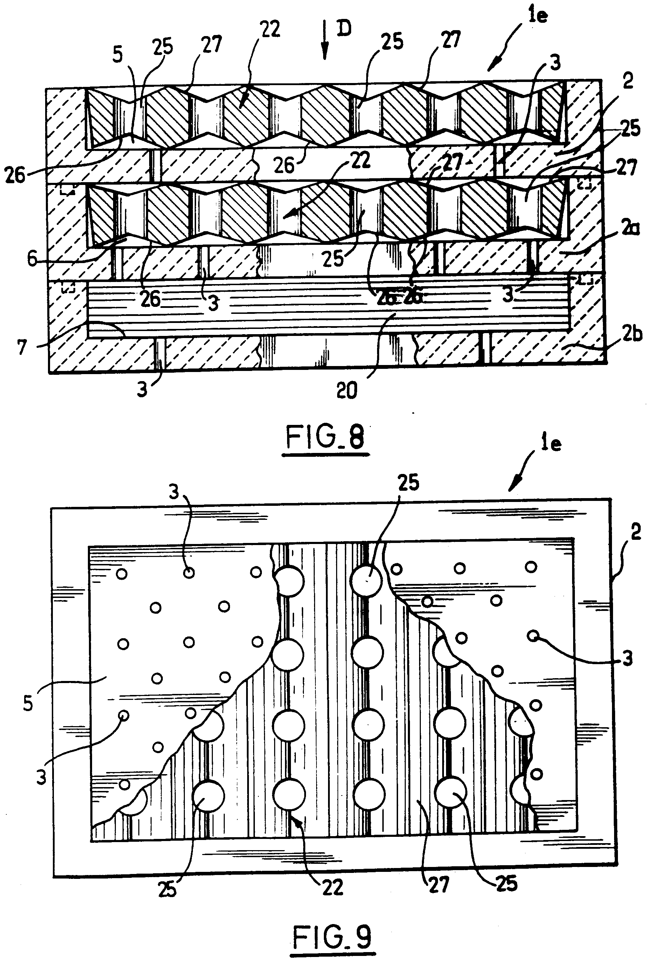

Dans la réalisation représentée sur les figures 8 à 12, le filtre 1e pour métal liquide comprend trois plaques 2, 2a, 2b en matière réfractaire, en contact les unes avec les autres, par leur périphérie et définissant entre elles plusieurs cavités 5, 6, 7. Ces plaques 2, 2a, 2b, comportent chacune une série de trous 3, permettant le passage et la filtration du métal liquide qui traverse le filtre 1e dans le sens de la flèche D.

Comme représenté aux figures 1 à 12, et suivant l'invention, l'une au moins des cavités 4, 5, 6 du filtre 1, 1a, 1b, 1c, 1d, 1e contient un matériau pour le traitement du métal en fusion à traiter.

Dans la réalisation des figures 1, 3, 4 et 5, le matériau 12 de traitement est sous forme pulvérulente et est retenu par une pellicule 13 en une matière susceptible de fondre, de carboniser ou de se calciner au contact du métal liquide à traiter.

La granulométrie du matériau pulvérulent est choisie en fonction des conditions de traitement que l'on souhaite.

La pellicule 13 en une matière susceptible de fondre, de carboniser ou de se calciner au contact du métal à traiter est par exemple une feuille d'aluminium ou de papier ou un film en matière plastique, ou encore une feuille composite.

Dans la réalisation des figures 1 et 3, le matériau 12 de traitement est contenu dans des sachets 8, 8a, 8b, réalisés avec ladite pellicule 13 et placés dans ladite cavité 4, 5, 6.

Les cavités 4 et 5 de la figure 1 contiennent chacune un sachet, respectivement 8, 8a, qui remplit partiellement ou presque complètement la cavité 4, 5, correspondante. Ces sachets 8, 8a, peuvent être identiques ou avoir des capacités différentes.

La cavité 6 à la figure 3 contient un sachet 8b disposé, à titre d'exemple, de manière excentrée dans ladite cavité 6.

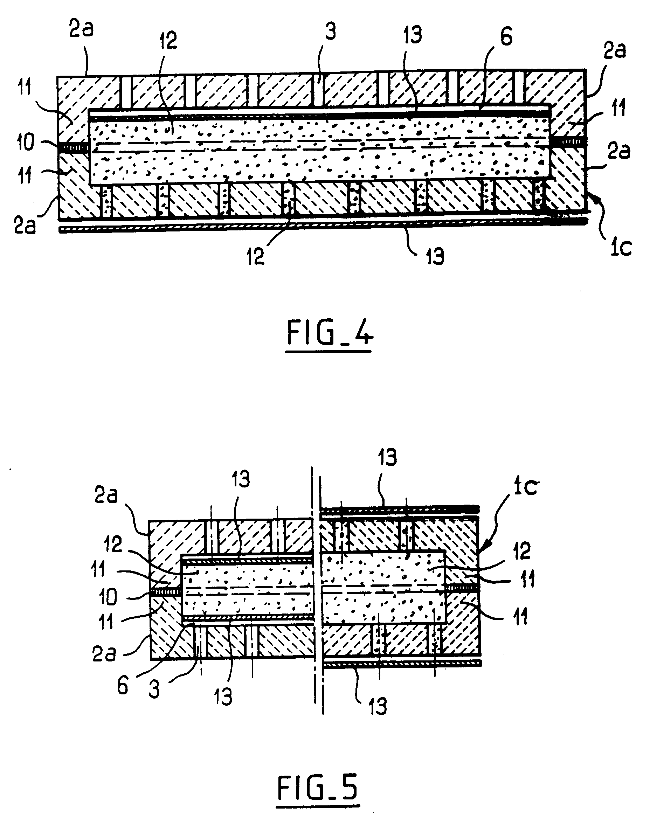

Dans la réalisation des figures 4 et 5, la cavité 6 ménagée entre les deux plaques 2a est remplie de matériau 12 de traitement pulvérulent, et les trous 3 des plaques 2a sont obturés par une pellicule 13 du type précité disposée sur la face intérieure ou sur la face extérieure de chaque plaque 2a.

Dans l'exemple de la figure 4, une pellicule 13 est fixée, par exemple collée, sur la face intérieure de la plaque supérieure. Une autre pellicule 13 est fixée sur la face extérieure de la plaque inférieure, les trous 3 étant remplis de matériau 12 de traitement.

Dans l'exemple de la figure 5, les pellicules 13 sont fixées sur les faces intérieures des plaques dans la demi-vue de gauche et sur les faces extérieures de ces plaques dans la demi-vue de droite. Ce dernier cas correspond au volume maximum de matériau 12 de traitement contenu dans le filtre 1c.

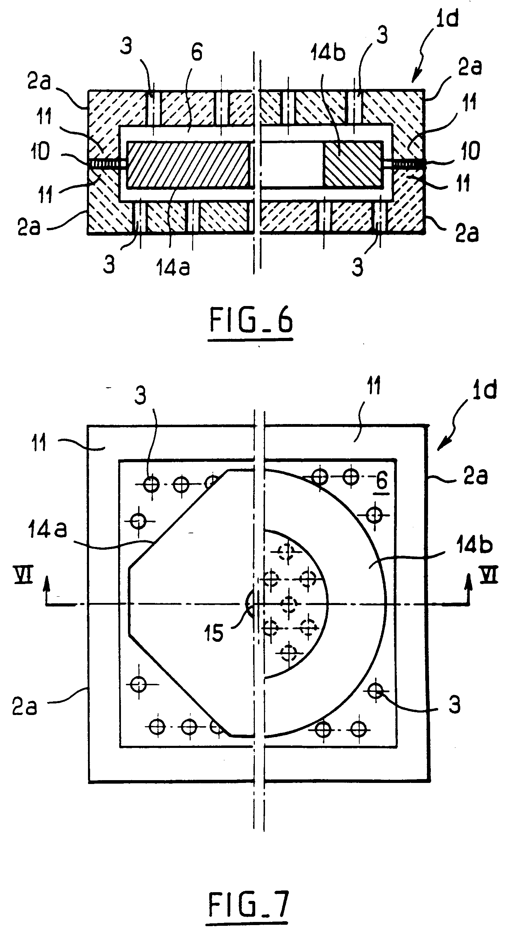

Dans la réalisation des figures 6 et 7, le matériau 12 de traitement pulvérulent est sous forme comprimée ou frittée, et se présente sous forme de plaques 14a, 14b ou barres. Les dimensions des plaques 14a, 14b ou barres sont inférieures ou égales aux dimensions intérieures de la cavité 6, pour que ces plaques ou barres puissent être mobiles à l'intérieur de la cavité 6 dès le début de la coulée sous l'action des turbulences engendrées par l'arrivée du métal en fusion dans la cavité 6.

On a représenté, à titre d'exemple, dans les demi-vues de gauche une plaque 14a de contour hexagonal et dans les demi-vues de droite une plaque 14b de forme annulaire. De telles plaques 14a, 14b sont par exemple comprimées avec un liant tel que stéarate ou analogue; on peut également agglomérer sous pression élevée le matériau 12 de traitement préparé par exemple sous forme cristallisée. La plaque 14a comporte un trou 15 central pour le passage du métal. Elle pourrait comporter d'autres trous de formes et dimensions diverses.

Les matériaux de traitement peuvent être des agents de désulfuration, par exemple du magnésium et/ou du carbure de calcium, et/ou être des agents thermogènes, par exemple du carbure de calcium, et/ou être des agents d'inoculation et/ou de post-inoculation, et/ou des agents de sphéroïdisation, par exemple du magnésium et/ou des terres rares et/ou du ferrosilicomagnésium, et/ou des agents d'alliages d'addition, par exemple des alliages au molybdène, au bore, au silicium, au ferrosilicium, au manganèse, au chrome, au titane, au ferroaluminium, au silicomischmétal, des agents de recarburation, par exemple à base de carbone ou de graphite, des fondants pour modifier la structure du métal, tels que sels de sodium, de phosphore, de bore, de titane, de strontium, etc.

Les figures 8 à 13 illustrent d'autres modes de réalisation de l'invention dans lesquels le matériau de traitement est un matériau 22, 23, 24 ayant des propriétés inoculantes vis-à-vis du métal liquide. Dans l'exemple représenté sur la figure 8, les cavités 5, 6 renferment chacun un matériau inoculant 22.

Dans le cas des figures 8 et 9, le matériau inoculant 22 est sous forme de plaque comportant des trous 25 de passage du métal liquide, ladite plaque s'étendant sur sensiblement toute la longueur et la largeur d'une cavité 5 ou 6.

Par ailleurs, la face de chaque plaque 22 adjacente au fond de la cavité 5 ou 6 comporte une série d'évidements 26 constitués par une série de dièdres parallèles.

Dans l'exemple de la figure 8, l'autre face de la plaque 22 comporte également des évidements 27. On voit également sur les figures 8 et 9 que les trous 25 de la plaque 22 en matière inoculante ont une section plus grande que celle des trous 3 des plaques en matière réfractaire 2, 2a, 2b.

Lorsque le métal liquide (acier ou fonte liquide) traverse le filtre 1e représenté sur la figure 8, il entre d'abord en contact avec la surface supérieure de la plaque 22 en matériau inoculant, traverse celui-ci par les trous 25, puis remplit les évidements 26 présents sur la face inférieure de la plaque 22 et s'écoule ensuite par les trous de filtration 3 de la plaque 2.

Du fait que les trous 3 ont une section inférieure à celle des trous 25 des plaques 22 en matériau inoculant, le métal remplit les évidements 26, ce qui permet d'obtenir une grande surface de contact entre le métal liquide et le matériau inoculant qui favorise la réaction du traitement du métal.

Ainsi, la présence du matériau inoculant 22 dans le filtre permet en combinaison avec les trous de filtration 3, d'améliorer les caractéristiques du métal plus efficacement que par une simple opération de filtration.

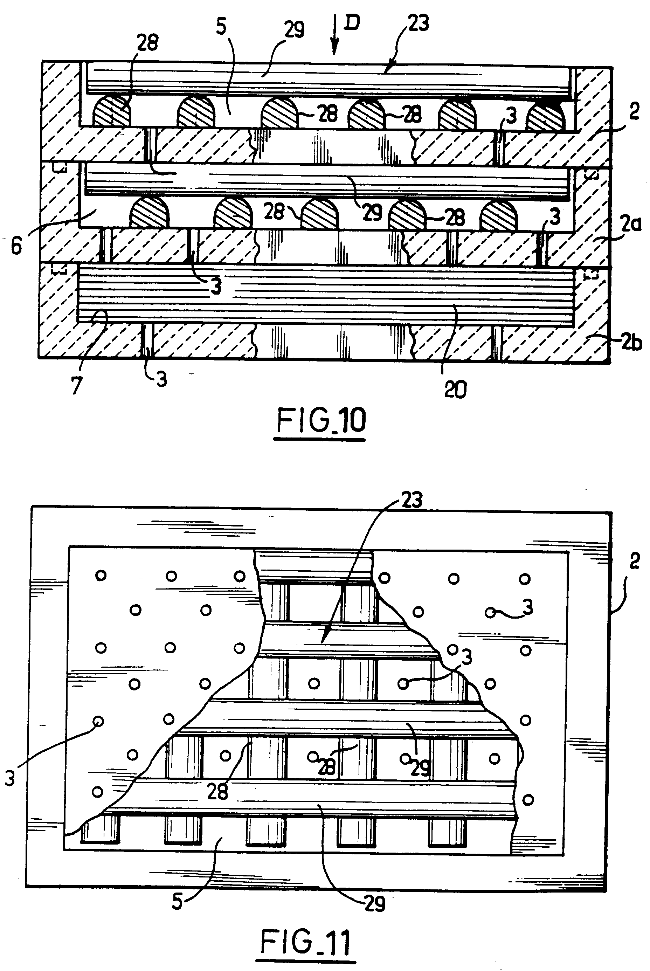

Dans la réalisation des figures 10 et 11, le matériau inoculant 23 est sous forme de barreaux 28, 29 espacés s'étendant sur sensiblement toute la longueur et la largeur des cavités 5 et 6 des plaques réfractaires 2, 2a.

Dans cette réalisation, les barreaux 28, 29 sont disposés suivant deux couches superposées et croisées, comme montré en particulier par la figure 11.

Lors de la filtration, le métal liquide lèche la surface des barreaux 28, 29 puis s'accumule au fond des cavités 5, 6 avant de s'écouler vers le bas par les trous 3.

Cette réalisation permet également de réaliser une importante surface de contact entre le métal liquide et le matériau inoculant permettant d'améliorer le rendement de l'inoculant.

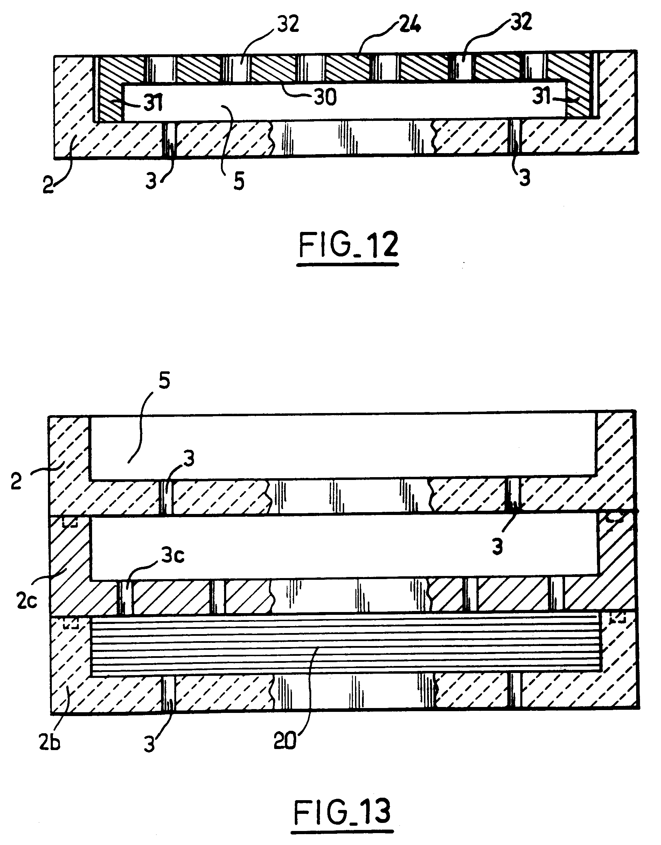

Dans la réalisation de la figure 12, la face de la plaque en matière inoculante 24 adjacente au fond de la cavité 5 de la plaque réfractaire 2 présente un évidement 30 délimité par un rebord périphérique 31 qui repose sur le fond de la cavité 5. Cette plaque 24 présente des trous 32 de passage du métal liquide.

Comme dans les réalisations des figures 8 à 11, les trous 32 de la plaque 24 en matériau inoculant ont une section plus grande que celle des trous 3 de la plaque 2. De ce fait, le métal liquide qui est coulé sur la plaque 24 traverse les trous 32 puis remplit l'évidement 30 avant de s'écouler par les ouvertures 3 de la plaque 2.

En remplissant l'évidement 30, le métal liquide est en contact avec une grande partie de la surface du matériau inoculant 24, ce qui permet une action d'inoculation plus efficace.

Dans l'exemple de la figure 13, le matériau inoculant est sous la forme d'une plaque 2c à trous 3c de forme identique à celle des plaques en matière réfractaire 2, 2b et occupant la place de l'une de celles-ci.

Par ailleurs, comme représenté aux figures 8, 10 et 13, au moins l'une des cavités des plaques 2, 2a, 2b en matière réfractaire est remplie d'une matière filtrante 20, par exemple en fibres réfractaires.

De préférence, cette matière filtrante 20 est disposée dans une cavité 7 située (voir figures 8 et 10), en aval d'une cavité 5 ou 6, renfermant un matériau inoculant 22 ou 23 relativement au sens D du passage du métal liquide.

Ce matériau filtrant 20 ajoute son efficacité propre pour augmenter encore davantage les performances du filtre selon l'invention.

A titre d'exemples non limitatifs, le matériau inoculant est choisi parmi les composés suivants: alliage de fer (par exemple alliage Fe-Si), magnésium et composés du magnésium, calcium et ses composés, composés de lithium, composés de strontium et composés de baryum, silicium, zirconium, aluminium, terres rares, graphite et carbone.

Bien entendu, l'invention n'est pas limitée aux exemples de réalisation que l'on vient de décrire et on peut apporter à ceux-ci de nombreuses modifications sans sortir du cadre de l'invention.

Les plaques 14a, 14b comprimées ou frittées peuvent être remplacées par des plaques massives moulées.

## Revendications

1. Dispositif (1d, 1e) pour filtrer et traiter du métal en fusion, comprenant une série d'au moins deux plaques (2, 2a, 2b) en matière minérale réfractaire définissant entre elles une ou plusieurs cavités (4, 5, 6), ces plaques comportant chacune une série de trous (3, 3a, 3b) permettant le passage du métal en fusion, l'une au moins des cavités (4, 5, 6) contenant un matériau (12, 22, 23, 24) pour le traitement dudit métal, caractérisé en ce que les plaques (2, 2a, 2b) sont des plaques filtrantes comportant chacune une série de trous de filtration (3, 3a, 3b) permettant le passage et la filtration du métal en fusion, en ce que deux plaques filtrantes adjacentes (2, 2a ; 2a, 2b) sont assemblées en contact l'une avec l'autre le long de leur périphérie, en ce que le matériau de traitement se trouve sous forme de plaques (14a, 14b, 22) ou de barres (28, 29) et en ce que la plaque (14a, 14b, 22) a ou les barres (28, 29) ont une forme telle que, vu dans le sens (D) du passage du métal liquide, elles(s) laisse(nt) sur les plaques filtrantes (2, 2a, 2b) au moins une région non recouverte comportant des trous de filtration (3, 3a, 3b) pour permettre au métal liquide ayant pénétré dans la cavité (4, 5, 6) de venir en contact avec le matériau de traitement de la plaque (14a, 14b, 22) ou des barres (28, 29) et de s'écouler autour de ladite plaque (14a, 14b, 22) ou desdites barres (28, 29) puis par les trous de filtration (3, 3a, 3b) de la seconde plaque filtrante (2, 2a, 2b).

2. Dispositif conforme à la revendication 1, caractérisé en ce que le matériau de traitement est sous forme de plaques (14a, 14b, 22) ou barres (28, 29) comprimées ou frittées ou moulées.

3. Dispositif conforme à l'une des revendications 1 ou 2, caractérisé en ce que les dimensions desdites plaques (14a, 14b, 22) ou barres (28, 29) sont inférieures ou égales aux dimensions intérieures de la cavité (5, 6) adaptées à les recevoir.

4. Dispositif conforme à l'une des revendications 1, 2 ou 3, caractérisé en ce que ledit matériau de traitement est sous forme de plaque (14a, 14b, 22) pouvant comporter un ou des trous (15, 25) de passage du métal liquide.

5. Dispositif conforme à la revendication 4, caractérisé en ce qu'au moins la face de ladite plaque (22) adjacente au fond de la cavité (5, 6) comporte une série d'évidements (26).

6. Dispositif conforme à la revendication 5, caractérisé en ce que lesdits évidements (26) sont constitués par une série de dièdres parallèles.

7. Dispositif conforme à l'une des revendications 5 ou 6, caractérisé en ce que l'autre face de ladite plaque (22) comporte également des évidements (27).

8. Dispositif conforme à l'une des revendications 5 à 7, caractérisé en ce que les trous (25) de ladite plaque (22) en matériau de traitement ont une section plus grande que celle des trous (3, 3a, 3b) des plaques (2, 2a, 2b) en matière réfractaire.

9. Dispositif conforme à l'une des revendications 1 à 3, caractérisé en ce que ledit matériau de traitement est sous forme de barreaux (28, 29) espacés s'étendant sur sensiblement toute la longueur et la largeur d'une cavité (5, 6).

10. Dispositif conforme à la revendication 9, caractérisé en ce que les barreaux (28, 29) sont disposés suivant au moins deux couches superposées et croisées.

11. Dispositif conforme à l'une des revendications 1 à 10, caractérisé en ce qu'au moins l'une des cavités (7) desdites plaques (2b) est remplie d'une matière filtrante (20).

12. Dispositif conforme à la revendication 11, caractérisé en ce que la matière filtrante (20) est disposée dans une cavité (7) située en aval d'une cavité (5, 6) renfermant un matériau de traitement relativement au sens (D) du passage du métal liquide.

13. Dispositif conforme à l'une des revendications 1 à 12, caractérisé en ce que ledit matériau de traitement est choisi parmi les produits désulfurants, thermogènes, inoculants, sphéroïdisants, recarburants, affinants, modificateurs, et les alliages d'addition.

14. Dispositif conforme à la revendication 13, caractérisé en ce que le poids du matériau de traitement est compris entre 0,001% et 1% environ du poids du métal en fusion.

15. Dispositif conforme à la revendication 13 ou 14, caractérisé en ce que ledit matériau de traitement est un matériau inoculant.

16. Dispositif conforme à la revendication 15, caractérisé en ce que ledit matériau inoculant est choisi parmi les composés suivants : alliage de fer, magnésium et composés du magnésium, calcium et ses composés, composés de lithium, composés de strontium et composés de baryum, silicium, zirconium, aluminium, terres rares, graphite, carbone.

17. Utilisation d'un dispositif selon l'une quelconque des revendications précédentes, dans un procédé de coulée en moule de métal en fusion comportant les étapes d'interposition d'un filtre et de traitement du métal en cours de ladite coulée.

## Claims

1. Device (1d, 1e) for filtering and treating molten metal, comprising a series of at least two plates (2, 2a, 2b) made of a refractory inorganic material which between them define one or more cavities (4, 5, 6), these plates each having a series of holes (3, 3a, 3b) allowing passage of the molten metal, at least one of the cavities (4, 5, 6) containing a material (12, 22, 23, 24) for the treatment of the said metal, characterized in that the plates (2, 2a, 2b) are filter plates each having a series of filtration holes (3, 3a, 3b) allowing passage and filtration of the molten metal, in that two adjacent filter plates (2, 2a; 2a, 2b) are joined, one in contact with the other, along their periphery, in that the treatment material is in the form of plates (14a, 14b, 22) or of bars (28, 29) and in that the plate (14a, 14b, 22) has or the bars (28, 29) have a shape such that, seen in the direction (D) of passage of the liquid metal, it (they) leaves (leave) on the filter plates (2, 2a, 2b) at least one uncovered region having filtration holes (3, 3a, 3b) in order to allow the liquid metal which has penetrated into the cavity (4, 5, 6) to come into contact with the treatment material of the plate (14a, 14b, 22) or of the bars (28, 29) and to flow around the said plate (14a, 14b, 22) or the said bars (28, 29) and then through the filtration holes (3, 3a, 3b) in the second filter plate (2, 2a, 2b).

2. Device according to Claim 1, characterized in that the treatment material is in the form of compressed or sintered or moulded plates (14a, 14b, 22) or bars (28, 29).

3. Device according to either of Claims 1 and 2, characterized in that the dimensions of the said plates (14a, 14b, 22) or bars (28, 29) are less than or equal to the internal dimensions of the cavity (5, 6) adapted to house them.

4. Device according to one of Claims 1, 2 and 3, characterized in that the said treatment material is in the form of a plate (14a, 14b, 22) which may have one or a number of holes (15, 25) for passage of the liquid metal.

5. Device according to Claim 4, characterized in that at least that face of the said plate (22) which is adjacent to the bottom of the cavity (5, 6) has a series of recesses (26).

6. Device according to Claim 5, characterized in that the said recesses (26) consist of a series of parallel dihedra.

7. Device according to either of Claims 5 and 6, characterized in that the other face of the said plate (22) also has recesses (27).

8. Device according to one of Claims 5 to 7, characterized in that the holes (25) in the said plate (22) of treatment material have a larger cross-section than that of the holes (3, 3a, 3b) in the plates (2, 2a, 2b) of refractory material.

9. Device according to one of Claims 1 to 3, characterized in that the said treatment material is in the form of bars (28, 29) which are spaced apart and extend over substantially the entire length and width of a cavity (5, 6).

10. Device according to Claim 9, characterized in that the bars (28, 29) are arranged in at least two superposed and crossed layers.

11. Device according to one of Claims 1 to 10, characterized in that at least one of the cavities (7) of the said plates (2b) is filled with a filtering substance (20).

12. Device according to Claim 11, characterized in that the filtering substance (20) is placed in a cavity (7) lying downstream of a cavity (5, 6) containing a treatment material relative to the direction (D) of the passage of liquid metal.

13. Device according to one of Claims 1 to 12, characterized in that the said treatment material is chosen from desulphurizing agents, thermogenic agents, inoculants, spheroidizing agents, recarburizing agents, refining agents, modifiers and addition alloys.

14. Device according to Claim 13, characterized in that the weight of the treatment material is between 0.001% and 1%, approximately, of the weight of the molten metal.

15. Device according to Claim 13 or 14, characterized in that the said treatment material is an inoculating material.

16. Device according to Claim 15, characterized in that the said inoculating material is chosen from the following compounds: an iron alloy, magnesium and magnesium compounds, calcium and its compounds, lithium compounds, strontium compounds and barium compounds, silicon, zirconium, aluminium, rare earths, graphite, carbon.

17. Use of a device according to any one of the preceding claims in a process for casting molten metal into a mould, comprising the steps of interposing a filter and of treating the metal during the said casting process.

## Patentansprüche

1. Vorrichtung (1d, 1e) zum Filtern und Behandeln von schmelzflüssigem Metall, die aufweist eine Reihe von mindestens zwei Platten (2, 2a, 2b) aus mineralischem, hitzebeständigem Material, die zwischen sich einen oder mehrere Hohlräume (4, 5, 6) bilden, wobei die Platten jeweils eine Reihe von Löchern (3, 3a, 3b) aufweisen, die den Durchgang des schmelzflüssigen Metalls erlauben, wobei mindestens einer der Hohlräume (4, 5, 6) ein Material (12, 22, 23, 24) für die Behandlung dieses Metalls enthält, dadurch gekennzeichnet, daß die Platten (2, 2a, 2b) Filterplatten sind, die jeweils eine Reihe von Filterlöchern (3, 3a, 3b) aufweisen, die den Durchgang und die Filtration des schmelzflüssigen Metalls erlauben, daß zwei benachbarte Filterplatten (2, 2a; 2a, 2b) in Kontakt miteinander entlang ihres Umfangs zusammengesetzt sind, daß das Behandlungsmaterial sich in Form von Platten (14a, 14b, 22) oder Barren (28, 29) findet und daß die Platte (14a, 14b, 22) oder die Barren (28, 29) eine solche Form haben, daß sie, gesehen in Richtung des Durchgangs des flüssigen Metalls, über den Filterplatten (2, 2a, 2b) mindestens einen Bereich unbedeckt lassen, der Filterlöcher (3, 3a, 3b) aufweist, um zu erlauben, daß das flüssige Metall, das in den Hohlraum (4, 5, 6) eingedrungen ist, mit dem Behandlungsmaterial der Platte (14a, 14b, 22) oder der Barren (28, 29) in Kontakt kommt und um diese Platte (14a, 14b, 22) oder diese Barren (28, 29) herum weiter durch die Filterlöcher (3, 3a, 3b) der zweiten Filterplatte (2, 2a, 2b) abläuft.

2. Vorrichtung nach Anspruch 1, dadurch gekennzeichnet, daß das Behandlungsmaterial in Form von Platten (14a, 14b, 22) oder Barren (28, 29) ist, die gepreßt oder gesintert oder geformt sind.

3. Vorrichtung nach einem der Ansprüche 1 oder 2, dadurch gekennzeichnet, daß die Abmessungen dieser Platten (14a, 14b, 22) oder Barren (28, 29) kleiner als die oder gleich den inneren Abmessungen des Hohlraums (5, 6) ist, der verwendet wird, um sie aufzunehmen.

4. Vorrichtung nach einem der Ansprüche 1, 2 oder 3, dadurch gekennzeichnet, daß das Behandlungsmaterial in Form einer Platte (14a, 14b, 22) ist, die ein oder mehrere Löcher (15, 25) zum Durchgang des flüssigen Metalls aufweisen können.

5. Vorrichtung nach Anspruch 4, dadurch gekennzeichnet, daß mindestens eine Seite der Platte (22), die dem Boden des Hohlraumes (5, 6) benachbart ist, eine Reihe von Vertiefungen (26) aufweist.

6. Vorrichtung nach Anspruch 5, dadurch gekennzeichnet, daß diese Vertiefungen (26) gebildet sind durch eine Reihe von parallelen V-Winkeln.

7. Vorrichtung nach einem der Ansprüche 5 oder 6, dadurch gekennzeichnet, daß die andere Seite dieser Platte (22) gleichermaßen Vertiefungen (27) aufweist.

8. Vorrichtung nach einem der Ansprüche 5 bis 7, dadurch gekennzeichnet, daß die Löcher (25) der Platte (22) aus Behandlungsmaterial einen Querschnitt haben, der größer ist als derjenige der Löcher (3, 3a, 3b) der Platten (2, 2a, 2b) aus hitzeheständigem Material.

9. Vorrichtung nach einem der Ansprüche 1 bis 3, dadurch gekennzeichnet, daß das Behandlungsmaterial in Form von gesperrt gesetzten Barren (28, 29) ist, die sich im wesentlichen über die gesamte Länge und die Breite eines Hohlraumes (5, 6) erstrecken.

10. Vorrichtung nach Anspruch 9, dadurch gekennzeichnet, daß die Barren (28, 29) in mindestens zwei übereinander liegenden und kreuzenden Lagen angeordnet sind.

11. Vorrichtung nach einem der Ansprüche 1 bis 10, dadurch gekennzeichnet, daß mindestens einer der Hohlräume (7) der Platten (2b) mit einem Filtermaterial (20) gefüllt ist.

12. Vorrichtung nach Anspruch 11, dadurch gekennzeichnet, daß das Filtermaterial (20) in einem Hohlraum (7) angeordnet ist, der stromabwärts eines Hohlraumes (5, 6) angeordnet ist, der ein Behandlungsmaterial einschließt, bezogen auf die Richtung (D) des Durchgangs des flüssigen Metalls.

13. Vorrichtung nach einem der Ansprüche 1 bis 12, dadurch gekennzeichnet, daß das Behandlungsmaterial ausgewählt ist aus den entschwefelnden, wärmeerzeugenden, impfenden, weichglühenden, rückkohlenden, reduzierenden Produkten und Modifikator-Produkten und den Zusatzlegierungen.

14. Vorrichtung nach Anspruch 13, dadurch gekennzeichnet, daß das Gewicht des Behandlungsmaterials enthalten ist zwischen ungefähr 0,001 % und 1 % des Gewichts des schmelzflüssigen Metalls.

15. Vorrichtung nach Anspruch 13 oder 14, dadurch gekennzeichnet, daß das Behandlungsmaterial ein Impfmaterial ist.

16. Vorrichtung nach Anspruch 15, dadurch gekennzeichnet, daß das Impfmaterial ausgewählt ist aus folgenden Zusammensetzungen: Legierung aus Eisen, Magnesium, und Magnesium-Verbindungen, Kalzium und seinen Verbindungen, Lithium-Verbindungen, Strontium-Verbindungen und Barium-Verbindungen, Silizium, Zirkonium, Aluminium, seltene Erden, Graphit, Kohlenstoff.

17. Verwendung einer Vorrichtung nach einem der vorhergehenden Ansprüche in einem Formgießverfahren für schmelzflüssiges Metall, das die Schritte des Einsetzens eines Filters und der Behandlung des Metalls im Verlauf des Gießens aufweist.
